# NEW EUROPEAN PATENT SPECIFICATION

(11) **EP 2 082 094 B2**
(45) Date of publication and mention of the opposition decision: **09.01.2019**
(45) Mention of the grant of the patent: 21.10.2015
(21) Application number: 07822609.9
(22) Date of filing: 15.11.2007
(51) Int. Cl.: D21C 9/00, D21H 21/02, C02F 5/08, D21H 17/65

(54) **A PROCESS FOR REDUCING SCALING IN THE PULP AND PAPER INDUSTRY AND USE OF CARBON DIOXIDE THEREFOR**
VERFAHREN ZUR VERMINDERUNG DER KALKSTEINBILDUNG IN DER ZELLSTOFF- UND PAPIERINDUSTRIE UND VERWENDUNG VON KOHLENSTOFFDIOXID DAFÜR
PROCÉDÉ POUR RÉDUIRE L'INCRUSTATION DANS L'INDUSTRIE DE LA PÂTE A PAPIER ET DU PAPIER ET UTILISATION DU DIOXYDE DE CARBONE POUR CELUI-CI

(30) Priority: 15.11.2006 FI 20065727
(43) Date of publication of application: 29.07.2009
(73) Proprietor: Linde AG, 80331 München (DE)
(72) Inventor: LEINO, Hannu, 17262 Sundbyberg (SE)
(74) Representative: Boco IP Oy Ab
(86) International application number: PCT/EP2007/062362
(87) International publication number: WO 2008/059006

(56) References cited:
- EP-A- 0 451 434
- EP-A1- 0 281 273
- EP-B- 0 981 665
- EP-B1- 0 954 512
- WO-A1-02/097189
- JP-A- 8 092 888
- PRAKASH M. TEMKAR ET AL: 'CALCIUM CARBONATE SCALE DISSOLUTION IN WATER STABILIZED BY CARBON DIOXIDE TREATMENT' USACERL TECHNICAL REPORT N-90/ 01 01 January 1990, XP055298296
- SCHOLZE R.J.: 'APPLICATION OF CARBON DIOXIDE TREATMENT TO MANAGE SCALE IN BUILDING POTABLE WATER SYSTEMS' FEAP-TECHNICAL REPORT - N-92/04T March 1992,
- RUDIE A.W. ET AL: 'MINERAL SCALE MANAGEMENT - PART II. FUNDAMENTAL CHEMISTRY' TAPPI JOURNAL vol. 5, no. 6, July 2006, pages 17 - 23
- "KOHLENDIOXID OPTIMIERT ALLE STUFEN DER PAPIERHERSTELLUNG", PRESS RELEASE OF AIR LIQUIDE DEUTSCHLAND GMBH OF JUNE 28TH, 2005
- RAUCH R. ET AL: 'OPTIMIZED DEAERATION LEADS TO SUBSTANTIAL PROCESS AND QUALITY IM-PROVEMENTS IN PAPER MANUFACTURING' AFRICAN PULP AND PAPER WEEK, [Online] 08 October 2002, XP055298627 Retrieved from the Internet: <URL:HTTP://TAPPSA.CO.ZA/ARCHIVE/APPW2002/T ITLE/OPTIMIZED_DEAERATION/OPTIMIZED_DEAERAT ION.HTML , RETRIEVED ON 05.07.2016>

## Description

### FIELD OF THE INVENTION

The present invention relates to a process for reducing scaling by calcium carbonate precipitation on equipment in the pulp and paper industry. The process is especially advantageous in the production of paper and board. The present invention further concerns the use of carbon dioxide for reducing scaling on equipment used in the pulp and paper industry.

### BACKGROUND OF THE INVENTION

Calcium carbonate CaCO₃ is commonly used in paper making as a filler or pigment because it improves the optical properties of the paper. It is also very white and can be purchased at reasonable price. The calcium carbonate may be naturally occurring chalk or calcite or it may be synthetically produced precipitated calcium carbonate (PCC). It is well known in the art that calcium carbonate dissolves in acids and in an acidic environment. Calcium carbonate is sparingly soluble in alkaline conditions above a pH of about 8, but it is attacked by acids such as sulfuric acid and alum, as a result of which it is solubilized.

Because of the instability of calcium carbonate in acidic conditions, calcium carbonate has traditionally been used as filler only in alkaline papermaking. Recently, a number of more or less acid tolerant forms of calcium carbonate have increased the use of calcium carbonate also at lower pH in papermaking. However, even when the papermaking process itself is alkaline, a number of paper chemicals and dilution waters are added, some of which are acidic and therefore decrease the pH of the pulp. As a consequence, calcium carbonate dissolves and enters the aqueous system of the process. Acid bleaching steps, such as dithionite bleaching of the fibers also release calcium ions into the circulation of the process.

Calcium ions enter the aqueous process fluids of the processes mainly with fillers used in the paper making or introduced with recycled paper or broke. Some calcium also derives from the wood and some calcium will enter the processes with calcium-rich fresh water.

With the use of closed circulating waters in the pulp and paper industry processes, the accumulation of calcium ions in the waters causes a number of complex problems in the systems. The increased use of recycled paper also increases the risk for accumulation of calcium ions. Among the problems caused, there may be mentioned coagulation of sticky particles, soap and ink particles; precipitation of inorganic calcium salts as a scaling; precipitation of calcium oxalate and re-precipitation of calcium carbonate; interference with retention aids, dispersants and other charged paper additives; etc.

Under alkaline conditions, precipitation of calcium carbonate may take place on the fibers, on the calcium carbonate particles or on any solid surfaces in the process. The problems relating to scaling due to calcium carbonate precipitation is especially severe on equipment used in the paper and board making processes.

Calcium carbonate precipitation is not only dependent on the pH of the aqueous process fluid, it is also dependent on the ionic strength of the fluid and the concentration of calcium ions in the fluid. It is well known that carbonate ions that originate from carbon dioxide in air, have a tendency to cause precipitation of calcium carbonate on equipment used in the pulp and paper industry. Carbon dioxide, together with variations in ionic strength and especially in calcium ion concentration, may cause sudden and severe precipitation of calcium carbonate in sensitive parts of the equipment.

Calcium carbonate precipitates preferentially on hot surfaces and in positions where the speed of the fluid flow is high and/or there is a pressure drop causing flow speed changes and/or turbulence. Scaling is especially problematic in equipment wherein there is a pressure drop in a fluid passing through a multitude of small orifices. The more sophisticated the equipment, the more is it prone to be disturbed by such scaling. Examples of such equipment are the head boxes, suction boxes and wires of paper machines and drying machines, the discs in disc filters. Scaling may also take place in the wires and drums of washing apparatus, in pumps, valves and other less sophisticated equipment, where the build-up of precipitated calcium carbonate with time causes problems.

For calcium carbonate to precipitate there needs to be both calcium ions and carbonate ions in the aqueous fluid. Carbonate ions enter the process fluids partly by dissolution of calcium carbonate and partly by dissolution of carbon dioxide from air. The carbon dioxide forms carbonic acid with the water and dissociation of the acid almost instantaneously provides carbonate ions. The concentrations of calcium and carbonates in alkaline process fluids are often very close to saturated or oversaturated. Because of the high concentration of calcium and carbonate, even slight variations in the conditions, such as temperature or turbulence may suddenly and dramatically cause precipitations.

Carbon dioxide is a gas, which has been used in the papermaking for various different purposes. According to literature (Eklund et al., Paper Chemistry - an introduction, DT Paper Science Publications, Grankulla, Finland 1991, p. 253-255) an increase in the carbon dioxide partial pressure slightly increases the solubility of solid calcium carbonate. On the other hand, the solubility of calcium carbonate decreases with increasing pH and decreasing ionic strength, and the time to equilibrium can be very long. When calcium carbonate is used in papermaking, it can be assumed that the pH is about 8.

Various specific uses of carbon dioxide have been described and claimed, as illustrated by the following patent publications:
EP 0 281 273 improves the defibrillation of an alkaline pulp by reducing the pH with carbon dioxide. EP 0 572 304 catalyzes the sizing of alkyl ketene dimers by carbon dioxide. EP 0 991 811 uses a combination of carbon dioxide and an alkali metal hydroxide to stabilize the pH of a pulp suspension. US 3,639,206 improves waste water effluent purity and precipitates calcium carbonate by an addition of a calcium salt and carbon dioxide. US 5,679,220 forms calcium carbonate filler on the fibers *in situ* by adding calcium hydroxide and carbon dioxide. GB 2 008 562 uses carbon dioxide to increase the hardness of flotation waters by dissolving calcium carbonate and carbon dioxide in a separate chamber. US 5,262,006 precipitates calcium ions from an alkaline pulp by adding carbon dioxide to the pulp. EP 0 981 665 and EP 0 981 671 reduce the dissolution of calcium carbonate in a papermaking system by the addition of carbon dioxide. EP 0 954 512 adds carbon dioxide under pressure to a calcium carbonate slurry and notes little or no decomposition. EP 1 029 124 improves the drainage of a pulp in a dewatering device by the use of carbon dioxide.

As indicated above, carbon dioxide has been used for reducing the dissolution of calcium carbonate as well as for increasing the same. It has been used for precipitating calcium carbonate and for dissolving calcium carbonate, but there is no indication of utilizing carbon dioxide for preventing calcium carbonate from precipitating as scaling on equipment in the pulp and paper industry.

Scaling caused by calcium carbonate is a growing problem in the pulp and paper industry as the environmental awareness is requiring less pollution and more and more closed water systems. Scaling is also a problem in areas, where the natural waters used in the processes contain a high amount of calcium. Scaling has so far been combated, for instance, by adding complex anti-scaling agents, by using condensates or other waters without calcium, by removing the calcium through precipitation in safe positions or by removing scaling by more or less mechanical means.

An example of the use of an anti-scaling agent is provided in JP 8092888, which describes a method for preventing scaling in a deinking process by adding an anti-scaling agent consisting of citric acid and/or its salt to the white water in the deinking process. However, it should be noted that adding an acid, such as citric acid, will reduce the pH of the fluid. The reduced pH may reduce the precipitation but it will also increase the dissolution of solid calcium carbonate. This will result in loss of filler and an even greater accumulation of calcium ions, which can then precipitate elsewhere in the process.

An example of the removal of calcium ions by precipitation is provided in WO 02/097189, which discloses the use of a "calcium kidney" which first raises the pH to 9 or more and then precipitates the calcium with carbon dioxide.

Despite the efforts of the pulp and paper industry to reduce the amount of dissolved calcium carbonate, calcium ions tend to accumulate in the aqueous process fluids and cause precipitations and scaling in many sensitive positions in the process. Anti-scaling agents such as chelates are expensive and mechanical removal of scaling is difficult and time consuming. Thus, there is a need for new ways of solving the problem.

The present invention seeks to overcome the problems relating to scaling caused in a fluid which contains calcium ions and carbonate ions in an amount which provides a tendency for calcium carbonate scaling. The problem is solved by controlling the chemical conditions so that there will be a reduced tendency for precipitation of calcium carbonate without an increased tendency for dissolution of calcium carbonate.

### BRIEF DESCRIPTION OF THE INVENTION

An object of the present invention is to provide a process for reducing calcium carbonate precipitation on equipment in the pulp and paper industry.

Another object of the invention is to prevent or reduce scaling in the equipment in the short circulation of a paper machine or drying machine.

An object of the invention is to provide a solution to the problem of scaling by calcium carbonate in the long and short circulations in the production of paper and board.

An object is also to reduce the tendency of calcium carbonate to precipitate without increasing the tendency of calcium carbonate to dissolve. The calcium ion content of the fluid should remain at a substantially unchanged level even when the fluid passes through equipment, which changes the energy of the fluid and thus increases the risk for precipitation of calcium carbonate. A change in energy is typically caused by factors such as pressure changes and/ or speed changes in the fluid flow.

The objects of the invention are achieved by a process and a use which are characterized by what is stated in the independent claims. The preferred embodiments of the invention are disclosed in the dependent claims.

Severe problems of calcium carbonate precipitation are encountered in the circulations of paper and board making processes. Fluids circulating in the process typically have a high concentration of calcium ions and carbonate ions. The fluids are often saturated or close to saturated or they may even be oversaturated with said ions. The problems are especially significant in paper machines and drying machine in alkaline processes for the production of paper or board. Despite the fact that the short circulation fluid is alkaline, calcium ions accumulate in the fluids and form saturated, close to saturated or oversaturated solutions together with the carbonate ions that originate from carbon dioxide in the air, from biological decomposition reactions or from calcium carbonate. The calcium ions tend to precipitate with the carbonate ions in the alkaline conditions of the short circulation. The precipitation increases with increased energy such as high temperature and strong flow. The precipitation causes scaling in the equipment, which causes problems in the over-all process and impairs the product.

Thus there is a need for keeping the dissolved calcium carbonate in a dissolved state in the alkaline process fluid. There is also a need to refrain from causing dissolution of the solid calcium carbonate contained in the fluid.

Now it has been surprisingly found that the addition of carbon dioxide into the alkaline aqueous process fluid can provide a solution to both of the above mentioned needs.

The invention is based on the realization that precipitation of calcium carbonate on equipment in a process for producing paper, board or pulp may be prevented by introducing carbon dioxide into an alkaline aqueous process fluid prior to the passage of said fluid through said equipment.

According to the invention, the calcium ion concentration will not significantly decrease by precipitation of calcium carbonate and will not significantly increase by dissolution of calcium carbonate.

Since the problem with calcium carbonate precipitation or scaling in an alkaline aqueous process fluid is, at least in part, caused by the dissolution of carbon dioxide and the ensuing creation of carbonate ions in the fluid, it is surprising that the very problem caused by carbon dioxide can be avoided by adding more carbon dioxide to the fluid.

Carbon dioxide is a chemical, which is easy to handle in the papermaking process. It is easy to feed into an aqueous fluid and it has an inherent buffering capacity, which avoids dramatic changes in the chemical conditions of the process and allows for a stable control mechanism.

### BRIEF DESCRIPTION OF THE DRAWING

In the following the invention will be described in greater detail by means of an embodiment with reference to the attached drawing, in which
Figure 1 shows a block diagram of a short circulation of an alkaline papermaking process with addition of calcium carbonate and carbon dioxide.

### DETAILED DESCRIPTION OF THE INVENTION

The present invention relates to a process for reducing scaling in the pulp and paper industry. According to the invention, precipitation of calcium carbonate on equipment in a process for making paper, board or pulp is prevented by introducing carbon dioxide into an alkaline aqueous process fluid prior to the passage of said fluid through said equipment.

The process according to to the invention is characterized in i) providing an alkaline aqueous process fluid in a process for making paper, board or pulp, said fluid containing calcium ions and carbonate ions which provide a tendency for calcium carbonate scaling, ii) causing said fluid to pass through equipment having portions, wherein said fluid is subjected to a change in energy, and iii) preventing precipitation of said calcium ions and carbonate ions and scaling on said equipment by introducing carbon dioxide into said fluid prior to the passage of said fluid through said equipment, wherein said alkaline aqueous process fluid has a pH between 7.8 and 8.5 prior to said introduction of carbon dioxide or would have a pH between 7.8 and 8.5 without said introduction of carbon dioxide.

In an embodiment of the invention the fluid contains calcium ions and carbonate ions in an amount which provides a tendency for calcium carbonate to precipitate. The fluid is typically saturated or close to saturated with said ions. Carbon dioxide is introduced in an amount sufficient for significantly reducing the tendency of calcium carbonate to precipitate on the equipment without significantly increasing the tendency of calcium carbonate to dissolve in the fluid. There is no need to remove the calcium and carbonate ions from the fluid by a separate precipitation operation prior to the passage of the fluid through said equipment.

The equipment typically comprises portions, wherein the alkaline aqueous process fluid is subjected to a change in energy, especially an increase in energy. For instance, when a fluid passes at a pressure through a multitude of orifices, the speed and energy of the fluid increases and this, in turn, increases the risk of precipitation of calcium carbonate in and/or in the vicinity of the orifices. Examples of equipment with a pressure drop and/or increased speed comprise the headbox of a paper machine or a drying machine, the wire of a paper machine or a drying machine, and the discs of a disc filter. A pressure drop in the suction boxes of a paper machine or a drying machine, as well as pressure drops in pumps and valves also increase the risk for precipitation.

The carbon dioxide used according to the invention is preferably in gaseous form as it is fed into the alkaline aqueous process fluid. However, the carbon dioxide can also enter said fluid with another fluid, which is subsequently added to said alkaline aqueous process fluid.

The alkaline aqueous process fluid has an increased risk for calcium carbonate precipitation in the equipment if it has a pH between 7.8 and 8.5. Said fluid has a significantly reduced tendency for calcium carbonate precipitation when the addition of carbon dioxide has ascertained that said fluid, as it passes through the equipment, has a pH below 7.8 and preferably pH 7.7 or less, most preferably pH 7.6 to 7.2.

Unless otherwise specified, the terms, which are used in the specification and claims, have the meanings commonly used in the pulp and paper industry. Specifically, the following terms have the meanings indicated below:
The terms "pulp and paper industry" and "process for making paper, board or pulp" refer to the various processes used for producing paper, board and dry pulp of different qualities and from different sources, such as from virgin pulp, recycled fibers and broke.

The term "aqueous process fluid" refers to any material liquid flow stream in the process for making paper, board or pulp, which contains water. The term refers to aqueous pulp suspensions of various concentrations, which flow from one end of the process to the other, ending in the wire section of the paper machine or drying machine. The term also refers to the flows of more or less fibre-free waters in the process. Such waters include the short circulation waters and the long circulation waters.

The term "stock" refers to aqueous pulp suspensions flowing in the process and containing both fibers and additives intended for the formation of the final dry product. The consistency of the stock varies depending on its location in the process.

The term "alkaline aqueous process fluid" refers to a liquid flow having a pH of about 7 to 9.5 and preferably 7.8 to 8.5.

The term alkaline papermaking refers to all papermaking processes where the pH in any part of the short circulation is above pH 7.

"Short circulation" refers to the system in which paper machine or drying machine wire water is separated from the stock in web forming and used for dilution of the stock to be delivered to the head box. The water separated from the stock is called "white water". In the present specification and claims the short circulation also refers to the stock which , after said dilution with white water, flows to the head box and onto The wire.

"Long circulation" refers to the system in which excess white water from the short circulation and other waters are collected at the paper machine or drying machine and used for stock dilution and other purposes in stock preparation.

"DIP" refers to recycled pulp produced by deinking.

"Stock preparation" refers to mechanical treatment of the stock before the machine chest, proportioning, and blending of the main stock components. Stock preparation begins with repulping or the dilution of pulp from integrated mill operations at the pulp storage towers and ends at the machine chest.

"Bone-dry paper" refers to paper having zero percent moisture content. The amount of carbon dioxide fed into the aqueous fluid is calculated on the basis of kg of 100% pure carbon dioxide per metric tons of bone-dry paper, board or pulp produced.

The term "amount which provides a tendency for calcium carbonate scaling" in relation to the calcium and carbonate ions in the aqueous process fluid refers to an amount which is saturated or close to saturated with said ions so that a change in conditions of the fluid is prone to cause precipitation of said ions as calcium carbonate. The precipitation behavior of calcium ions and carbonate ions is well know in the art and depends on the solubility product of the ionic species. In case there is doubt as to whether there is a tendency for calcium carbonate scaling in a certain fluid, this can be ascertained e.g. by those skilled in the art by measuring the concentration of calcium and carbonate ions in said fluid. In practice, the tendency for scaling will be observed during the running of the process by scaling observed on equipment through which the fluid passes.

The term "substantially unchanged level" in connection with the concentration of calcium ions in the alkaline aqueous process fluid indicates that the passage of the fluid through the equipment in question does not cause precipitation nor dissolution to such a degree that it has any practical influence on the operation of the equipment in question. The term "significant" should be understood in the same practical sense. Thus, a reduction of the precipitation is considered "significant", if it avoids or diminishes the calcium carbonate precipitation problems from a practical point of view in the mill. An increase in calcium carbonate dissolution is considered "significant" if it increases the calcium ion concentration to such a degree that it causes precipitation, which would not otherwise have taken place, or it causes loss of filler in an amount which impairs the product. In the preferred embodiment of the invention there is essentially no precipitation and no dissolution.

The invention will now be described mainly by referring to the short circulation of a paper machine in an alkaline papermaking process utilizing calcium carbonate as filler. However, the same principles apply also to the production of board and to the short circulation of a drying machine in a pulp making process and to equipments outside the short circulation. By introducing carbon dioxide into the process fluid in accordance with the invention the precipitation of calcium carbonate in the short circulation of the machine is significantly reduced compared to the situation where no carbon dioxide is added to said short circulation.

A typical block diagram of a short circulation of a paper machine is illustrated in Fig. 1. It should be noted, however, that Fig. 1 is only an illustration and that in practice equipment, addition points etc. may vary hugely from one short circulation to another.

Stock produced in the stock preparation of the paper mill is fed from a machine chest (not shown) into the short circulation of the process. As the stock enters the short circulation, it is diluted with white water from the wire pit 6 and is pumped by a pump 1 to cleaning 2, which typically includes screens and/or cyclones. The cleaned stock is fed to a de-aerator 3 for removal of air and then it is fed into the head box 4. In the head box the dilute stock is fed at a pressure above 100 kPa (1 bar) and typically about 200 to 600 kPa (2-6 bar) through a multitude of small orifices evenly onto the wire 5. On the wire, the stock is dewatered through the small orifices of the wire and the dewatered web is fed onwards to the press section of the paper machine for the formation of paper, while the drained white water is collected in the wire pit 6. One portion of the white water is fed through short circulation line 7 to dilute the stock entering the short circulation, while a second portion of the white water is fed into the long circulation 8 for various dilution purposes mainly in the stock preparation. The long circulation 8 typically contains a white water tank 9 and a disc filter 10.

The stock entering the short circulation may contain dissolved calcium carbonate derived from recycled paper used as raw material as well as from broke recycled to the process.

Calcium carbonate filler may also have been added to the stock already in the stock preparation. Additional calcium may derive from the wood and from calcium-rich fresh water. Bacterial activity in storage towers and tanks may have caused decomposition of calcium carbonate.

Calcium carbonate filler may be added in the short circulation typically before pump 1. In the short circulation various other chemicals may be added and some of them may be acidic, which causes a local or general drop in The pH. This, in turn, may cause an increase in the calcium ion content of the stock. The calcium ions mainly follow the white water in the short circulation and consequently, the calcium ions accumulate in the circulation.

The concentration of calcium ions in the aqueous process fluid is often saturated or even oversaturated, i.e. the calcium ions will stay in their dissolved state, but the system is very sensitive and small changes can trigger a precipitation of calcium carbonate. System changes that can trigger a precipitation of calcium carbonate are e.g. calcium carbonate content and calcium ion content of the incoming stock and the dilution waters, and variations in the amount of dilution water. The variations in the system are especially prone to cause scaling in equipment where energy is added to the system. Thus, the system may become instable (precipitating) at any moment without warning.

Because of the calcium carbonate filler, the pH of the stock entering the head box is alkaline and most typically the pH is about 8. However, the stock properties are not absolutely uniform and, at the alkaline pH, turbulence of the alkaline fluid or increase in temperature may trigger a sudden and dramatic precipitation. The dissolution of carbon dioxide into the stock from the air increases the risk for precipitation by providing an increase of carbonate ions.

The precipitation preferentially takes place in equipment in which the stock flow passes through a multitude of mall orifices, wherein the high pressure differences and the high speed increase the risk for precipitation. The pressure drop over the headbox is typically above 200 kPa (2 bar) and consequently, the risk for precipitation in the headbox is great. The speed of the stock flowing through the head box orifices is typically between 5 and 30 m/s. On the wire the white water is pressed through a multitude of small orifices and although the pressure drop is not as big as in the head box, precipitations tend to take place also in or in the vicinity of the wire orifices, especially at the underside of the wire, thus blocking the orifices.

According to the invention, carbon dioxide is fed into the alkaline process fluid, i.e. into the stock to reduce or prevent precipitation. As carbon dioxide is one of the reasons for precipitation, actively adding carbon dioxide would have been thought to worsen the situation. Moreover, carbon dioxide provides acid and acids are known to increase the dissolution of calcium carbonate and to increase the accumulation of calcium ions and carbonate ions. However, in accordance with the invention it has been found that adding carbon dioxide to the alkaline process fluid, e.g. to the stock, reduces the precipitation without causing significant additional dissolution of calcium carbonate.

The carbon dioxide is typically introduced directly into the alkaline aqueous process fluid. The carbon dioxide is preferably introduced in gaseous form, although it is in principle possible to add the carbon dioxide as a liquid or solid. The carbon dioxide may also be introduced to the alkaline aqueous process fluid by initially feeding carbon dioxide into another fluid, which is subsequently added to said process fluid.

When the alkaline aqueous process fluid comprises a short circulation fluid, such as stock or white water, the said other fluid may be selected from the group consisting of fresh water, clear filtrate, paper additive, and pulp stock in the stock preparation of the paper or board making process.

In one embodiment of the invention, carbon dioxide is introduced into a short circulation fluid, especially into diluted stock upstream of the head box of a paper machine. The carbon dioxide may also be introduced into the short circulation stock downstream of a pump, which feeds one or more cyclone(s) that is/are located upstream of the head box. Another suitable position for introducing carbon dioxide is on either side of a deaerator positioned just upstream of the head box. Since the carbon dioxide will dissolve very quickly in the alkaline short circulation fluid, the carbon dioxide can be added close to the dearator or head box. A suitable time for allowing the carbon dioxide to dissolve and react is 1 to 10 seconds.

The stock is often introduced into the short circulation via the wire pit and the carbon dioxide can also be introduced into the stock just before the wire pit. The carbon dioxide can also be introduced into the short circulation white water flow. When the carbon dioxide is added to the white water, the amount added should be such as to provide a suitable anti-scaling effect in the stock after dilution.

The pH of the alkaline aqueous process fluid is in the range between 7.8 and 8.5 prior to the introduction of carbon dioxide. It is also possible that the aqueous process fluid has a pH, which is not within said range, but that it would have a pH within said range in case no addition of carbon dioxide were made. This may, for instance, be the case, when carbon dioxide is added to the aqueous process fluid before the addition of calcium carbonate to said fluid.

The pH of the alkaline aqueous process fluid should preferably have been adjusted by the carbon dioxide addition to a pH below 7.8, by the time said fluid passes through any equipment having an increased risk of precipitation. More preferably, the pH of the fluid at the passage through the equipment should be pH 7.7 or less. If neutral or weakly acidic conditions are desired, the pH may of course be adjusted to a pH closer to 7 and even lower, such as between 6 and 7 with additional carbon dioxide.

The amount of carbon dioxide that should be introduced in order to be effective in preventing the precipitation varies depending on the conditions and concentrations of the various ions in the aqueous process fluid. However, good results can be obtained by introducing carbon dioxide in an amount of between 0.5 and 10 kg per bone-dry ton (BDT) of paper, board or pulp produced in said process. Preferably, the amount of carbon dioxide is between 1 and 7 kg per bone-dry ton.

The carbon dioxide should preferably be introduced in an amount sufficient to reduce the pH of said aqueous process fluid. The carbon dioxide may also be introduced so as to prevent the pH from rising. The aim is to keep the pH below 7.8 and typically at about 7.5 at the passage of the aqueous process fluid through the equipment in question.

In a preferred embodiment of the invention, the alkaline aqueous process fluid comprises diluted stock or white water in the short circulation, and the pH of said fluid is reduced by at least 0.1 pH unit, preferably 0.2 pH units or more by the introduction of carbon dioxide.

In another embodiment, the alkaline aqueous process fluid comprises white water in the long circulation of a process for making paper or board. A piece of equipment, which is very sensitive to scaling by calcium carbonate precipitation is the disc filter, through which the white water typically passes before being fed as clear filtrate into the long circulation. In the white water the accumulated calcium ions of the short circulation pose a risk for scaling. The disc filter comprises discs with a multitude of small orifices, through which water is pressed by vacuum, while fibres and solids are retained on the discs. The pressure drop in the discs has a tendency to cause precipitations, when the accumulated calcium ion content (hardness) of the water is high. Adding carbon dioxide in accordance with the invention reduces the risk for scaling in the disc filter.

In another embodiment of the invention, the alkaline aqueous fluid comprises pulp or water flowing in the fibre plant of a pulp mill. Scaling problems may occur in the head box of a drying machine in the same way as described above relating to the production of paper and board.

In the process according to the invention, carbon dioxide may be introduced for forming a buffer in the alkaline aqueous process fluid or in another fluid, which is added to said alkaline aqueous process fluid. The buffer should preferably maintain the pH at a stable level below 7.8 and preferably at pH 7.6 to 7.2.

When carbon dioxide is added to the aqueous process fluid, it influences the concentration of calcium ions and thereby influences electrical properties of the aqueous process fluid (see Eklund et al. p. 254). The calcium ions in the solution are positively charged and the carbonate ions created by carbon dioxide are negatively charged. These ions as well as the other ionic species in the fluid, such as H⁺, OH⁻, HCO₃⁻, and the reactions at the surface of the solid calcium carbonate particles all participate in the electrical interactions in the fluid. The same ionic species, and especially the amount of bicarbonate ions, also influence the alkalinity of the aqueous process fluid. The alkalinity is increased by the introduction of carbon dioxide and the process pH is stabilized.

As mentioned above, the equipment, which is most prone to suffer from scaling due to calcium carbonate precipitation are those, wherein a pressure drop in a multitude of small orifices causes sudden release of pressure. It has been found that calcium carbonate preferentially precipitates in such positions. An increased risk of precipitation is seen in equipment with a pressure drop greater than 20 kPa (0.2 bar). This is a typical pressure drop in wires and washing drums. The pressure drop in a head box is much bigger, typically greater than 100 kPa (1 bar) and most typically between 200 and 600 kPa (2 and 6 bar). The pressure drop in a disc filter is not as high as in a head box, but it is typically higher than on the wire. The pressure drop in disc filters and wires depends on the vacuum applied to separate the water. The pressure drop in pumps, valves and suction boxes varies and depends on the process conditions and the construction of the equipment in question.

In one embodiment of the invention, pulp comprising an aqueous process fluid, which has been treated with carbon dioxide for reducing the precipitation of calcium carbonate and has passed through said equipment, is processed into paper, board or dry pulp in a manner know as such. The lack of precipitation and the stability of the system improves the quality of the product produced, improves the runnability of the paper machine or drying machine, avoids the need for chelating agents or other expensive anti-scaling agents, enables the use calcium-rich fresh water and reduces the environmental impact by allowing more closed water loops in the process.

The invention teaches the use of carbon dioxide for reducing scaling on equipment in the pulp and paper industry. The reduced scaling is provided in a fluid which contains calcium and carbonate ions. The amount of said ions is such that it provides a tendency for scaling on equipment, which causes a change of energy in the fluid. A preferred embodiment of the invention relates to the reducing of scaling caused by precipitation of calcium carbonate in the short circulation of a paper or board making process.

The following Example serves to illustrate the invention.

### EXAMPLE

The short circulation shown in Fig. 1 produces paper in an alkaline papermaking process. The raw material of the process is based partly (45%) on recycled paper (DIP) containing varying amounts of calcium carbonate as filler and/or coating and partly on kraft softwood pulp (55%). Stock at a consistency of about 3 % is fed into the short circulation from a machine chest (not shown) in the stock preparation. The stock is diluted with white water from the wire pit 6 to a consistency of about 1.0 %.

As the diluted stock passes from pump 1 to cleaning 2, calcium carbonate slurry is fed into the stock as filler. The stock is cleaned in a series of screens and cyclones and then it is fed via de-aerator 3 and through the head box 4 onto the wire 5. The resulting web is dewatered and fed to a press section and drying section (not shown) and made into paper. The drained white water is collected in wire pit 6.

The stock entering the short circulation contains varying amounts of dissolved calcium carbonate derived mainly from the recycled paper used as raw material. The pH of the diluted stock entering the head box varies between 7.9 and 8.2. Its concentration of calcium ions varies between 100 and 160 mg/l. From time to time the process encounters severe problems with precipitation of calcium carbonate in the head box and some additional precipitation on the wire. To deal with the scaling problem, the mill has had to stop the paper machine every third week to mechanically clean the head box.

To alleviate the scaling problem, carbon dioxide according to the invention is introduced in the form of industrial grade gaseous carbon dioxide on the pressure side of pump 1. The amount of carbon dioxide is about 2.5 kg per BDT. The pH of the stock entering the head box is reduced to 7.6. There are no calcium carbonate scaling problems in the head box nor on the wire. No loss of calcium carbonate filler is noted.

The concentration of calcium ions measured in the separated white water corresponds substantially to the concentration of calcium ions in the stock before the introduction of carbon dioxide. It still varies between 100 and 160 mg/l. In the white water the carbonate ion content is significantly reduced compared to that of the stock and the bicarbonate ion content is significantly increased compared to that of the stock. Thus, the carbon dioxide maintains the calcium ions at a substantially unchanged level, reduces the carbonate ion level and increases the bicarbonate ion level.

## Claims

1. A process for reducing scaling in the pulp and paper industry, **characterized in**
- providing an alkaline aqueous process fluid in a process for making paper, board or pulp, said fluid containing calcium ions and carbonate ions which provide a tendency for calcium carbonate scaling,
- causing said fluid to pass through equipment having portions, wherein said fluid is subjected to a change in energy by a change in pressure and/or speed, and
- preventing precipitation of said calcium ions and carbonate ions and scaling on said equipment by introducing carbon dioxide into said fluid prior to the passage of said fluid through said equipment,
wherein said alkaline aqueous process fluid has a pH between 7.8 and 8.5 prior to said introduction of carbon dioxide or would have a pH between 7.8 and 8.5 without said introduction of carbon dioxide.

2. A process according to claim 1, wherein said equipment comprises equipment wherein said fluid is subjected to a pressure drop, said equipment being selected from a head box, suction box and wire of a paper machine or drying machine, a disc filter, a pump, and a valve.

3. A process according to claim 1, wherein said carbon dioxide is introduced to said aqueous process fluid by feeding carbon dioxide in gaseous form into said fluid.

4. A process according to claim 1, wherein the amount of carbon dioxide introduced is sufficient to adjust the pH of said aqueous process fluid below pH 7.8 for said passage through said equipment.

5. A process according to claim 4, wherein said amount of carbon dioxide introduced is sufficient for adjusting the pH of said fluid to pH 7.7 or less, preferably to pH 7.6 to 7.2 for said passage through said equipment.

6. A process according to claim 4 or 5, wherein additional carbon dioxide is introduced in an amount sufficient to cause the pH of said aqueous process fluid, after said introduction of additional carbon dioxide, to be between 6 and 7.

7. A process according to any one of the claims 1 to 6, wherein said alkaline aqueous process fluid comprises water or stock flowing in the short or the long circulation of a paper machine or drying machine.

8. A process according to claim 7, wherein carbon dioxide is introduced to a short circulation fluid by initially feeding carbon dioxide into another fluid, which is subsequently added to said short circulation fluid.

9. A process according to claim 8, wherein said other fluid is selected from the group consisting of fresh water, clear filtrate, a paper additive, and pulp stock in the stock preparation of said machine.

10. A process according to claim 1, wherein the amount of introduced carbon dioxide is between 0.5 and 10 kg per bone-dry ton of paper, board or pulp produced in said process.

11. A process according to claim 10, wherein the amount of introduced carbon dioxide is between 1 and 7 kg per bone-dry ton of paper, board or pulp.

12. A process according to claim 11, wherein said alkaline aqueous process fluid comprises short circulation fluid and the pH of said short circulation fluid is reduced by at least 0.1 pH unit, preferably 0.2 pH units or more by said introduction of carbon dioxide.

13. A process according to any of the preceding claims 1 to 12, wherein said carbon dioxide is introduced for forming a buffer in said alkaline aqueous process fluid or in another fluid, which is added to said alkaline aqueous process fluid.

14. A process according to any of the preceding claims 1 to 12, wherein the alkalinity of said aqueous process fluid is increased by said introduction of carbon dioxide.

15. A process according to claim 2, wherein said pressure drop is 20 kPa (0.2 bar) or greater.

16. A process according to claim 2, wherein said equipment comprises a head box and said pressure drop is greater than 100 kPa (1 bar) and preferably between 200 and 600 kPa (2 and 6 bar).

17. A process according to claim 1, wherein said process for making paper or board uses pulp made at least partially from recycled paper and/or broke containing calcium carbonate as a filler.

18. A process according to any one of the preceding claims, wherein precipitation of calcium carbonate in the short circulation of a paper machine is reduced compared to the situation where no carbon dioxide is added to said short circulation.

19. A process according to any one of the preceding claims, wherein pulp comprising said aqueous process fluid after said passage through said equipment is processed into paper, board or dry pulp.

20. Use of carbon dioxide for reducing scaling by a calcium ion and carbonate ion containing fluid having a pH between 7.8 and 8.5 prior to introduction of carbon dioxide in the pulp and paper industry on equipment, which causes a change of energy by a change in pressure and/or speed in said fluid.

21. Use according to claim 20 for reducing scaling caused by precipitation of calcium carbonate in the short circulation of a paper or board making process.

## Patentansprüche

1. Verfahren zur Reduzierung von Ablagerungen in der Zellstoff- und Papierindustrie, **gekennzeichnet durch**
- Bereitstellen eines alkalischen wässrigen Prozessfluids in einem Verfahren zur Herstellung von Papier, Karton oder Zellstoff, wobei dieses Fluid Calcium-Ionen und Carbonat-Ionen enthält, die eine Neigung zur Bildung von Calciumcarbonat-Ablagerungen aufweisen,
- Hindurchführen dieses Fluids durch Ausrüstungen mit Teilabschnitten, wobei dieses Fluid durch eine Änderung des Drucks und/oder der Geschwindigkeit eine Änderung der Energie erfährt, und
- Verhindern des Ausfällens dieser Calcium-Ionen und Carbonat-Ionen und von Ablagerungen an diesen Ausrüstungen, indem Kohlenstoffdioxid in dieses Fluid eingetragen wird, bevor dieses Fluid diese Ausrüstungen durchströmt, wobei dieses alkalische wässrige Prozessfluid vor dem Eintragen von Kohlenstoffdioxid einen pH-Wert zwischen 7,8 und 8,5 aufweist oder ohne das Eintragen von Kohlenstoffdioxid einen pH-Wert zwischen 7,8 und 8,5 aufweisen würde.

2. Verfahren nach Anspruch 1, wobei diese Ausrüstungen Ausrüstungen umfassen, in denen dieses Fluid einem Druckgefälle unterliegt, wobei diese Ausrüstungen gewählt sind aus Stoffauflauf, Saugkasten und Sieb einer Papiermaschine oder Trocknungsmaschine, Scheibenfilter, Pumpe und Ventil.

3. Verfahren nach Anspruch 1, wobei dieses Kohlenstoffdioxid in dieses wässrige Prozessfluid dadurch eingetragen wird, dass Kohlenstoffdioxid diesem Fluid gasförmig zugeführt wird.

4. Verfahren nach Anspruch 1, wobei die eingetragene Menge an Kohlenstoffdioxid ausreichend ist, um den pH-Wert dieses wässrigen Prozessfluids für das Durchströmen dieser Ausrüstungen auf unter 7,8 einzustellen.

5. Verfahren nach Anspruch 4, wobei die eingetragene Menge an Kohlenstoffdioxid ausreichend ist, um den pH-Wert dieses Prozessfluids für das Durchströmen dieser Ausrüstungen auf 7,7 oder weniger, vorzugsweise auf 7,6 bis 7,2 einzustellen.

6. Verfahren nach Anspruch 4 oder 5, wobei zusätzliches Kohlenstoffdioxid in einer Menge eingetragen wird, die ausreichend ist, um den pH-Wert dieses wässrigen Prozessfluids nach Eintragen des zusätzlichen Kohlenstoffdioxids auf zwischen 6 und 7 zu bringen.

7. Verfahren nach einem der Ansprüche 1 bis 6, wobei dieses alkalische wässrige Prozessfluid Wasser oder Stoff umfasst, das bzw. der im kleinen oder großen Kreislauf einer Papiermaschine oder Trocknungsmaschine strömt.

8. Verfahren nach Anspruch 7, wobei Kohlenstoffdioxid einem Fluid des kleinen Kreislaufs zugegeben wird, indem Kohlenstoffdioxid zuerst in ein anderes Fluid eingetragen wird, das anschließend diesem Fluid des kleinen Kreislaufs beigemengt wird.

9. Verfahren nach Anspruch 8, wobei dieses andere Fluid gewählt ist aus der Gruppe bestehend aus Frischwasser, Klarfiltrat, Papierhilfsmittel und Faserstoff in der Stoffaufbereitung dieser Maschine.

10. Verfahren nach Anspruch 1, wobei die Menge an eingetragenem Kohlenstoffdioxid zwischen 0,5 und 10 kg pro absolut trockener Tonne des in diesem Verfahren hergestellten Papiers, Kartons oder Zellstoffs beträgt.

11. Verfahren nach Anspruch 10, wobei die Menge an eingetragenem Kohlenstoffdioxid zwischen 1 und 7 kg pro absolut trockener Tonne Papier, Karton oder Zellstoff beträgt.

12. Verfahren nach Anspruch 11, wobei dieses alkalische wässrige Prozessfluid Fluid des kleinen Kreislaufs umfasst und der pH-Wert dieses Fluids des kleinen Kreislaufs durch dieses Eintragen von Kohlenstoffdioxid um mindestens 0,1 pH-Einheiten, vorzugsweise 0,2 pH-Einheiten oder mehr, reduziert wird.

13. Verfahren nach einem der vorhergehenden Ansprüche 1 bis 12, wobei dieses Kohlenstoffdioxid eingetragen wird, um im alkalischen wässrigen Prozessfluid oder in einem anderen Fluid, das diesem alkalischen wässrigen Prozessfluid zugegeben wird, einen Puffer auszubilden.

14. Verfahren nach einem der vorhergehenden Ansprüche 1 bis 12, wobei die Alkalität dieses wässrigen Prozessfluids durch dieses Eintragen von Kohlenstoffdioxid erhöht wird.

15. Verfahren nach Anspruch 2, wobei dieses Druckgefälle 20 kPa (0,2 bar) oder mehr beträgt.

16. Verfahren nach Anspruch 2, wobei dies Ausrüstung einen Stoffauflauf umfasst und dieses Druckgefälle größer ist als 100 kPa (1 bar) und vorzugsweise zwischen 200 und 600 kPa (2 und 6 bar) beträgt.

17. Verfahren nach Anspruch 1, wobei dieses Verfahren zur Herstellung von Papier oder Karton Faserstoff verwendet, der wenigstens teilweise aus Altpapier und/oder Ausschuss hergestellt wird und Calciumcarbonat als Füllstoff enthält.

18. Verfahren nach einem der vorhergehenden Ansprüche, wobei das Ausfällen von Calciumcarbonat im kleinen Kreislauf einer Papiermaschine im Vergleich zu der Situation, wo dem kleinen Kreislauf kein Kohlenstoffdioxid zugegeben wird, reduziert wird.

19. Verfahren nach einem der vorhergehenden Ansprüche, wobei Faserstoff, der dieses wässrige Prozessfluid nach Durchlauf durch diese Ausrüstung umfasst, zu Papier, Karton oder Trockenzellstoff verarbeitet wird.

20. Verwendung von Kohlenstoffdioxid zur Verringerung von Ablagerungen durch ein Calcium-Ionen und Carbonat-Ionen enthaltendes Fluid, das vor dem Eintragen vin Kohlenstoffdioxid einen pH-Wert zwischen 7,8 und 8,5 aufweist, in der Zellstoff- und Papierindustrie an Ausrüstungen, die in diesem Fluid eine Änderung der Energie durch eine Änderung des Drucks und/oder der Geschwindigkeit verursachen.

21. Verwendung nach Anspruch 20 zur Verringerung von Ablagerungen, die durch das Ausfällen von Calciumcarbonat im kleinen Kreislauf eines Papier- oder Kartonherstellungsverfahrens verursacht werden.

## Revendications

1. Procédé pour réduire l'incrustation dans l'industrie de la pâte à papier et du papier, **caractérisé en ce qu'**il comprend les étapes suivantes:
- fournir un fluide de traitement aqueux alcalin dans un procédé de fabrication de papier, de carton ou de pâte à papier, ledit fluide contenant des ions calcium et des ions carbonate qui engendrent une tendance à l'incrustation de carbonate de calcium,
- amener ledit fluide à passer à travers un équipement comprenant des parties, dans lequel ledit fluide est soumis à une variation d'énergie par une variation de la pression et/ou de la vitesse, et
- empêcher la précipitation desdits ions calcium et ions carbonate ainsi que l'incrustation sur ledit équipement en introduisant du dioxyde de carbone dans ledit fluide avant le passage dudit fluide à travers ledit équipement, dans lequel ledit fluide de traitement aqueux alcalin présente un pH compris entre 7,8 et 8,5 avant ladite introduction du dioxyde de carbone, ou présenterait un pH compris entre 7,8 et 8,5 sans ladite introduction de dioxyde de carbone.

2. Procédé selon la revendication 1, dans lequel ledit équipement comprend un équipement dans lequel ledit fluide est soumis à une baisse de pression, ledit équipement étant sélectionné parmi une caisse d'arrivée, une caisse aspirante et un fil d'une machine à papier ou d'une machine de séchage, un filtre à disques, une pompe et une soupape.

3. Procédé selon la revendication 1, dans lequel ledit dioxyde de carbone est introduit dans ledit fluide de traitement aqueux en introduisant le dioxyde de carbone sous forme gazeuse dans ledit fluide.

4. Procédé selon la revendication 1, dans lequel la quantité de dioxyde de carbone introduit est suffisante pour régler le pH dudit fluide de traitement aqueux en dessous d'un pH de 7,8 pour ledit passage à travers ledit équipement.

5. Procédé selon la revendication 4, dans lequel ladite quantité de dioxyde de carbone introduit est suffisante pour régler le pH dudit fluide à pH 7,7, ou moins, de préférence à pH 7,6 à 7,2 pour ledit passage à travers ledit équipement.

6. Procédé selon la revendication 4 ou 5, dans lequel du dioxyde de carbone supplémentaire est introduit en une quantité suffisante pour amener le pH dudit fluide de traitement aqueux, après ladite introduction de dioxyde de carbone supplémentaire, à se situer entre 6 et 7.

7. Procédé selon l'une quelconque des revendications 1 à 6, dans lequel ledit fluide de traitement aqueux alcalin comprend de l'eau ou une masse qui s'écoule dans la circulation courte ou longue d'une machine à papier ou d'une machine de séchage.

8. Procédé selon la revendication 7, dans lequel du dioxyde de carbone est introduit dans un fluide à circulation courte en incorporant initialement le dioxyde de carbone dans un autre fluide, qui est ensuite ajouté audit fluide à circulation courte.

9. Procédé selon la revendication 8, dans lequel ledit autre fluide est sélectionné dans le groupe comprenant l'eau fraîche, un filtrat clair, un additif pour papier et de la pâte à papier lors de la préparation de masse par ladite machine.

10. Procédé selon la revendication 1, dans lequel la quantité de dioxyde de carbone introduit est comprise entre 0,5 kg et 10 kg par tonne absolument sèche de papier, de carton ou de pâte à papier produite au cours dudit procédé.

11. Procédé selon la revendication 10, dans lequel la quantité de dioxyde de carbone introduit est comprise entre 1 kg et 7 kg par tonne absolument sèche de papier, de carton ou de pâte à papier.

12. Procédé selon la revendication 11, dans lequel ledit fluide de traitement aqueux alcalin comprend un fluide à circulation courte, et le pH dudit fluide à circulation courte est réduit d'au moins 0,1 unité de pH, de préférence d'au moins 0,2 unité de pH, ou plus, par ladite introduction de dioxyde de carbone.

13. Procédé selon l'une quelconque des revendications 1 à 12, dans lequel ledit dioxyde de carbone est introduit pour former un tampon dans ledit fluide de traitement aqueux alcalin ou dans un autre fluide, qui est ajouté audit fluide de traitement aqueux alcalin.

14. Procédé selon l'une quelconque des revendications 1 à 12, dans lequel l'alcalinité dudit fluide de traitement aqueux alcalin est accrue par ladite introduction de dioxyde de carbone.

15. Procédé selon la revendication 2, dans lequel la baisse de pression est de 20 kPa (0,2 bar), ou plus.

16. Procédé selon la revendication 2, dans lequel ledit équipement comprend une caisse d'arrivée, et ladite baisse de pression est supérieure à 100 kPa (1 bar) et se situe de préférence entre 200 kPa et 600 kPa (3 bars et 6 bars).

17. Procédé selon la revendication 1, dans lequel ledit procédé de fabrication de papier ou de carton utilise une pâte à papier constituée au moins partiellement de papier recyclé et/ou de cassé de fabrication contenant du carbonate de calcium comme agent de remplissage.

18. Procédé selon l'une quelconque des revendications précédentes, dans lequel une précipitation de carbonate de calcium dans la circulation courte d'une machine à papier est réduite comparativement à la situation dans laquelle aucune quantité de dioxyde de carbone n'est ajoutée à ladite circulation courte.

19. Procédé selon l'une quelconque des revendications précédentes, dans lequel la pâte à papier contenant ledit fluide de traitement aqueux après ledit passage à travers ledit équipement est traitée de manière à obtenir du papier, du carton ou une pâte à papier sèche.

20. Utilisation de dioxyde de carbone pour réduire l'incrustation par un fluide contenant un ion calcium et un ion carbonate et présentant un pH compris entre 7,8 et 8,5 avant l'introduction du dioxyde de carbone dans l'industrie de la pâte à papier et du papier sur un équipement, qui entraîne une variation de l'énergie par une variation de la pression et/ou de la vitesse dans ledit fluide.

21. Utilisation selon la revendication 20 pour réduire l'incrustation provoquée par une précipitation de carbonate de calcium dans la circulation courte d'un procédé de fabrication de papier ou de carton.
